# EUROPÄISCHE PATENTSCHRIFT

(11) **EP 1 046 659 B1**
(45) Veröffentlichungstag und Bekanntmachung des Hinweises auf die Patenterteilung: **17.08.2005**
(21) Anmeldenummer: 00107971.4
(22) Anmeldetag: 17.04.2000
(51) Int. Cl.: C08G 18/48, B32B 5/18, B32B 27/40

(54) **Verbundelement enthaltend Polyisocyanat-Polyadditionsprodukte, insbesondere Warmwasserspeicher enthaltend Polyurethanhartschaumstoffe**
Composite elements comprising polyisocyanate-polyaddition products, in particular a hot water storage comprising rigid polyurethane foam
Eléments composites comprenant des produits de polyaddition de polyisocyanate, notamment chauffe-eau à accumulation comprenant de la mousse rigide de polyuréthane

(30) Priorität: 21.04.1999 DE 19918175
(43) Veröffentlichungstag der Anmeldung: 25.10.2000
(73) Patentinhaber: BASF AKTIENGESELLSCHAFT, 67056 Ludwigshafen (DE)
(72) Erfinder: Fricke, Bernd, 32351 Stemwede (DE); Krogmann, Jörg, 49393 Lohne (DE)

(56) Entgegenhaltungen:
- EP-A- 0 567 027
- EP-A- 0 610 752
- EP-A- 0 960 723
- WO-A-00/04070
- DE-A- 19 519 679
- US-A- 5 690 855
- DATABASE WPI Section Ch, Week 199534 Derwent Publications Ltd., London, GB; Class A25, AN 1995-261332 XP002144049 & JP 07 165867 A (MITSUI TOATSU CHEM INC), 27. Juni 1995 (1995-06-27)

## Beschreibung

Die Erfindung bezieht sich auf Warmwasserspeicher enthaltend Verbundelemente enthaltend (i) mindestens eine selbsttragende, kompakte Komponente, (ii) Hartschaumstoff auf der Basis von Polyisocyanat-Polyadditionsprodukten, der keine halogenierte Kohlenwasserstoffe mit einem Siedepunkt von 20 bis 70°C bei einem Druck von 1 bar enthält und wobei als Treibmittel zur Herstellung von (ii) im wesentlichen Wasser eingesetzt wird, und mindestens eine weitere kompakte Komponente (iii). Des weiteren bezieht sich die Erfindung auf Verfahren zur Herstellung dieser Warmwasserspeicher.

Der Einsatz von Hartschaumstoffen auf der Basis von Polyisocyanat-Polyadditionsprodukten, üblicherweise Polyurethanen (PUR) und/oder Polyisocyanuraten (PIR), als Material zur thermischen Isolierung ist allgemein bekannt. Derartige Schaumstoffe kommen beispielsweise in gedämmten Rohren, Sandwichelementen, Kühlschränken und Warmwasserspeichern zum Einsatz. Die Herstellung z.B. der Warmwasserspeicher erfolgt im allgemeinen dadurch, daß man die Ausgangskomponenten zur Herstellung der Schaumstoffe mit üblichen Verarbeitungsmaschinen in den Zwischenraum von Innenbehälter und Außenmantel einbringt. Durch das anschließende Aufschäumen wird der Hohlraum völlig ausgefüllt. Die Verschäumung mit Systemen zur Herstellung der Schaumstoffen, die im wesentlichen oder ausschließlich auf Wasser als Treibmittel beruhen, war bislang nur mit zusätzlichen Stützformen möglich, die den bei der Verschäumung entstehenden Schäumdruck kompensieren und einer Deformation des Außenmantels entgegenwirken. Der Schäumdruck war notwendig, um dem Schaumschrumpf, der bei rein Wasser-getriebenen Schaumstoffen auftritt, vorzubeugen.

Warmwasserspeicher, die ohne zusätzliche Stützform gefertigt werden, d.h. ohne Einrichtungen, die gewährleisten, daß durch die Ausschäumung Innenbehälter und insbesondere Außenmantel ihre Form behalten, sind selbsttragend konstruiert und können deshalb nur einen geringen Schäumdruck standhalten. Unter dem Ausdruck "selbsttragend" ist im Folgenden zu verstehen, daß die entsprechenden Elemente auch ohne zusätzliche Stützelemente ihre dreidimensionale Form nicht verlieren.

Durch das Einbringen eines Reaktionsgemisches zur Herstellung von Polyurethanen in einen Hohlraum dehnt sich das Gemisch in Folge der durch die Reaktion entstehenden Gasbildung aus. Es findet also eine Volumenvergrößerung des Reaktionsgemisches statt. Diese ist vor allem von der eingebrachten Menge des Reaktionsgemisches abhängig.

Um einen Hohlraum völlig auszufüllen und aus dem Reaktionsgemisch einen stabilen, schrumpfunempfindlichen PUR- Hartschaum herzustellen, ist es notwendig, eine größere Menge des Reaktionsgemisches in den auszuschäumenden Hohlraum einzufüllen (Überfüllung). Dadurch wird das Reaktionsgemisch verdichtet und es entsteht ein erhöhter Druck auf die Wandungen des Hohlkörpers. Um diesem Druck standzuhalten und einer Deformation entgegenzuwirken, sind sehr aufwendige, temperierbare Stützformen (Formenwerkzeuge zur Erhaltung der ursprünglichen äußeren Form der Komp. (i)) notwendig. Diese Stützformen kosten pro Stück ca. 10.000 bis 500.000 DM.

Der Produktionsprozeß mit Stützformen ist aufwendiger, da diese be- und entladen werden müssen. Zusätzlich ist eine Formenverweilzeit notwendig, die von der Aushärtung des Reaktionsgemisches abhängt. Insofern sind oft mehrere Stützformen für ein einziges Produkt notwendig, um große Stückzahlen fertigen zu können. Verändern sich die Konturen an den auszuschäumenden Produkten (Hohlräume), sind gleichzeitig Änderungen an den Stützwerkzeugen notwendig, was jeweils mit sehr hohen Kosten verbunden ist. Bei kleineren Produktstückzahlen gehen die Werkzeugkosten gravierend in die Gesamtkosten ein, da die Stützwerkzeuge ebenso aufwendig gebaut werden müssen wie bei großen Stückzahlen.

Hersteller von Warmwasserspeichern, die ohne zusätzliche Stützformen arbeiten, waren demnach nicht in der Lage, ausschließlich Wasser als Treibmittel einzusetzen und verwendeten deshalb üblicherweise halogenierte Kohlenwasserstoffe. Ein Ersatz dieser Treibmittel, insbesondere durch Wasser als wesentliches oder ausschließliches Treibmittel, ist aber ökologisch wünschenswert.

Die Aufgabe der vorliegenden Erfindung bestand somit darin, Verbundelemente, insbesondere Warmwasserspeicher, mit einer selbsttragenden Komponente (i), beispielsweise einem Außenmantel, zu entwickeln, deren Hartschaumstoffe auf der Basis von Polyisocyanat-Polyadditionsprodukten keine halogenierten Kohlenwasserstoffe mit einem Siedepunkt von 20 bis 70 °C bei einem Druck von 1 bar enthalten. Diese Verbundelemente sollten ohne den Einsatz von Stützformen und ohne Deformation der Komponente (i) und/oder (iii), insbesondere (i) herstellbar sein.

Diese Aufgabe konnte durch ein eingangs beschriebenes Verbundelement gelöst werden.

Die erfindungsgemäßen Verbundelemente sind erfindungsgemäß in Warmwasserspeichern enthalten.

Die Komponente (ii) der erfindungsgemäßen Verbundelemente weist bevorzugt eine Dichte von 0,02 bis 0,10, besonders bevorzugt 0,03 bis 0,05 g/cm³ auf. Gerade diese Hartschaumstoffe geringer Dichte stellen eine wirtschaftlich günstige Ausführungsform dar, die bislang ohne Stützformen mit Wasser als wesentlichem Treibmittel nicht zugänglich waren.

Bevorzugt enthält (ii) nur untergeordnete Mengen, besonders bevorzugt überhaupt keine Mengen an physikalischen Treibmittel, die üblicherweise zur Herstellung von geschäumten Polyisocyanat-Polyadditionsprodukten eingesetzt werden, d.h. organischen Flüssigkeiten mit einem Siedepunkt von 20 bis 70 °C bei einem Druck von 1 bar. Erfindungsgemäß wird zur Herstellung von (ii) im wesentlichen, besonders bevorzugt ausschließlich Wasser eingesetzt. Die eingesetzte Menge an Wasser beträgt üblicherweise 1 bis 10 Gew.-%, bevorzugt 3 bis 6 Gew.-%, jeweils bezogen auf das Gewicht der gegenüber Isocyanaten reaktiven Verbindungen, die an späterer Stelle definiert werden.

Die Komponenten (i) und (iii) stellen die Materialien dar, zwischen denen der Hartschaumstoff (ii), bevorzugt haftend an (i) und (iii) angeordnet ist. Beispielsweise kann (i) eine äußere Haut oder einen äußeren Mantel darstellen und (iii) die innere Komponente, in der sich das thermisch zu isolierende Gut, z.B. die Flüssigkeit oder das Gas, befindet. Im Falle der Ausgestaltung der Verbundelemente in Warmwasserspeichern stellt beispielsweise (i) die äußere Haut, d.h. den Mantel dar, während (iii) den Innenbehälter bildet. Diese Ausgestaltung, in der (i) eine äußere Wand und (iii) einen inneren Behälter darstellt und (ii) zwischen (i) und (iii) angeordnet ist, stellt eine bevorzugte Ausführungsform dar.

Für die Komponente (i) können allgemein bekannte Materialien eingesetzt werden, beispielsweise bekannte Kunststoffe, z.B. Polystyrol, ABS, ASA, Polypropylen, Polyethylen, bevorzugt Metalle, wie Stahl, Aluminium und/oder Kupfer.

Die selbsttragende Komponente (i) kann die äußere Gestaltung der Verbundelemente, die in weiteren Bereichen variiert werden kann, insbesondere der Warmwasserspeicher, vorgeben. Die Dicke der Komponente beträgt üblicherweise 0,3 bis 2,0 mm.

Die Komponente (iii) kann beispielsweise auf üblichen, bevorzugt thermoplastischen Kunststoffen, z.B. Polystyrol, ABS, ASA, Polypropylen, Polyethylen, bevorzugt Metalle, wie Stahl, Aluminium und/oder Kupfer basieren. Bevorzugt ist (iii), insbesondere in der Ausgestaltung als Innenbehälter in Warmwasserspeichern, aus Kupfer und/oder Stahl gefertigt, wobei die Oberfläche gegebenenfalls emailliert sein kann. Die Dicke von (iii) beträgt bevorzugt 1 bis 4 mm.

Bevorzugt wird der Hartschaumstoff (ii) von den Komponenten (i) und (iii), gegebenenfalls mit Ausnahme von Leitungen in den Innenraum des Warmwasserbehälters und zur Befüllung des Raumes zwischen (i) und (iii) mit den Ausgangskomponenten zur Herstellung von (ii), umschlossen. Zur Fixierung von (i) und (iii) bei der Herstellung von (ii) hat es sich als vorteilhaft erwiesen, geeignete Konstruktionselemente, beispielsweise Abstandshalter, einzusetzen. Diese Abstandshalter, die üblicherweise zwischen (i) und (iii) angeordnet sind, dienen nicht als Stützformen, sondern lediglich zur Fixierung eines definierten Raumes zwischen (i) und (iii), der von (ii) ausgefüllt werden soll. Die Dicke von (ii), d.h. der Abstand zwischen (i) und (iii) beträgt bevorzugt zwischen 5 und 150 mm.

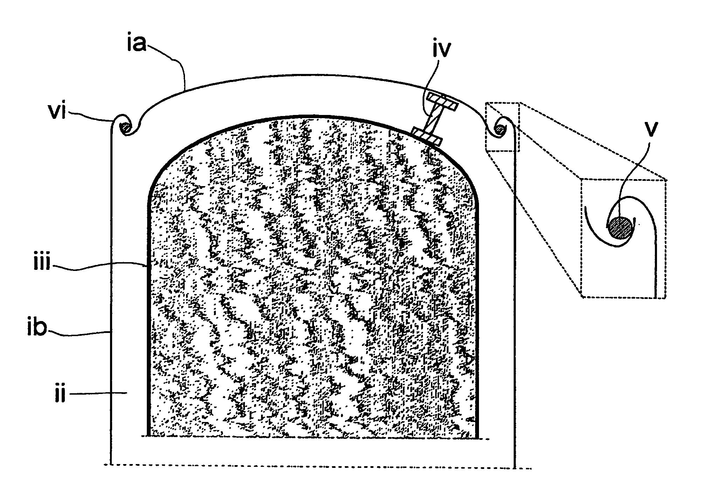

Bevorzugt sind Verbundelemente, bei denen (i) aus mindestens zwei Elementen besteht, zwischen denen eine Dichtung angeordnet ist. Eine derartige Ausgestaltung ist in der Figur 1 beispielhaft dargestellt. Der in dieser Figur abgebildete Ausschnitt eines Behälters, beispielsweise eines Warmwasserspeichers, enthält, beispielsweise als äußere Mantel, die Komponente (i) und als inneren Behälter das Element (iii), wobei (i) und (iii) mit einem oder mehreren Abstandshaltern (iv) fixiert sind. Die Komponente (i) kann aus mehr als einem Element bestehen, beispielsweise einem Boden und/oder Deckel (ia) und einem Mantel (ib), wobei gemäß der Zeichnung zwischen diesen Elementen (ia) und (ib) eine Dichtung (v) angeordnet ist. Durch den Druck des entstehenden Schaumes können (ia) und (ib) gegen die Dichtung (v) gepreßt und damit (ii) von der äußeren Umgebung abgeschlossen werden. Ein Schaumaustritt an den Dichtkanten wird somit verhindert. Die Dichtung (v) ist bevorzugt in einem Falz (vi), der aus den umbördelten Rändern von (ia) und (ib) gebildet wird, angeordnet. Die Elemente (ia), beispielsweise die Böden oder Deckel der Warmwasserspeicher, setzt man bevorzugt in einer gewölbten Form ein, besonders bevorzugt sind diese Elemente zur von (ii) abgewandten Seite gewölbt. (ia) ist somit, wie auch (ib) selbsttragend.

Die erfindungsgemäßen Verbundelemente können derart hergestellt werden, daß man in einem Reaktionsraum, der begrenzt ist durch folgende Schichten:
i) selbsttragende, kompakte Komponente
iii) kompakte Komponente

Isocyanate mit gegenüber Isocyanaten reaktiven Verbindungen in Gegenwart von Treibmitteln und gegebenenfalls Katalysatoren, Hilfs- und/oder Zusatzstoffen umsetzt, wobei keine halogenierten Kohlenwasserstoffe mit einem Siedepunkt von 20 bis 70°C bei einem Druck von 1 bar verwendet werden.

Die Umsetzung zur Herstellung von (ii) wird bevorzugt derart durchgeführt, daß der bei dem Schäumprozeß entstehende Druck (i) und/oder (iii) nicht deformiert, d.h. daß die Reaktionsmischung enthaltend die Isocyanate, die gegenüber Isocyanaten reaktiven Verbindungen, die Treibmittel und gegebenenfalls die Katalysatoren, Hilfs- und/oder Zusatzstoffe zur Herstellung des Hartschaumstoffs (ii) auf der Basis von Polyisocyanat-Polyadditionsprodukten bei der Umsetzung von 163 g Reaktionsmischung in einem geschlossenen, zylindrischen Behältnis mit einem Volumen von 4,08 l einen maximalen Druck in dem Behältnis entwickelt, der kleiner als 1,25 bar, bevorzugt zwischen 1,02 und 1,08 bar ist. Der bei dem Verschäumen entstehende Druck kann durch allgemein bekannte Verfahren gemessen werden. Der Druckverlauf sollte bei druckarmen Systemen möglichst flach und langsam fallend verlaufen. Das ist ein Indiz für eine verzögerte CO₂-Bildung bei einer gleichzeitig langsamen Reaktion , was im nachhinein leicht Druckunterstützend wirkt und gleichzeitig einem auftretenden Schrumpf entgegenwirkt. Der Reaktionsverlauf sollte möglichst langsam verlaufen, da durch eine schnelle Reaktion viel Wärme entsteht, die das Zellgas zusätzlich ausdehnt und damit unnötigen Druck erzeugt.

Entgegen der Erwartung können bei einer solchen geringen Druckentwicklung während des Verschäumens auch selbsttragende Komponenten (i) und/oder (iii) mit (ii) ohne Stützformen und ohne Deformation verschäumt werden, wobei auf halogenierte Kohlenwasserstoffe weitgehend verzichtet wird und bevorzugt im wesentlichen, besonders bevorzugt ausschließlich Wasser als Treibmittel eingesetzt wird. Bei Hartschaumstoffen, die im wesentlichen mit Wasser hergestellt wurden, konnten zur Herstellung insbesondere von Warmwasserspeichern aufgrund der üblicherweise sehr hohen Druckentwicklung auf den Einsatz von Stützelementen nicht verzichtet werden.

Wie bereits dargestellt, wird als Treibmittel zur Herstellung von (ii) im wesentlichen, bevorzugt ausschließlich Wasser eingesetzt. Dies bietet den Vorteil, daß ökologisch bedenkliche Treibmittel im wesentlichen oder vollständig ersetzt werden können.

Die Umsetzung von Isocyanaten mit gegenüber Isocyanaten reaktiven Verbindungen in Gegenwart von Treibmitteln und gegebenenfalls Katalysatoren, Hilfs- und/oder Zusatzstoffen zu den (ii) Polyisocyanat-Polyadditionsprodukten ist allgemein bekannt und vielfältig beschrieben.

Als Isocyanate, bevorzugt organische und/oder modifizierte organische Polyisocyanate, kommen die an sich bekannten aliphatischen, cycloaliphatischen, araliphatischen und vorzugsweise aromatischen mehrwertigen Isocyanate in Frage, wie sie beispielsweise in EP-A-0 421 269 (Spalte 4, Zeile 49, bis Spalte 6, Zeile 22) oder in EP-A-0 719 807 (Spalte 2, Zeile 53, bis Spalte 4, Zeile 21) aufgeführt sind.

Besonders bewährt haben sich Diphenylmethan-diisocyanat-Isomerengemische oder Roh-MDI mit einem Diphenylmethandiisocyantisomerengehalt von 33 bis 55 Masse-% und urethangruppenhaltige Polyisocyanatgemische auf Basis von Diphenylmethandiisocyanat mit einem NCO-Gehalt von 15 bis 33 Masse-%.

Als gegenüber Isocyanaten reaktive Verbindungen können Verbindungen mit mindestens zwei gegenüber Isocyanaten reaktiven Wasserstoffatomen verwendet werden. Hierfür kommen Verbindungen in Frage, die zwei oder mehrere reaktive Gruppen, ausgewählt aus OH-Gruppen, SH-Gruppen, NH-Gruppen, NH₂-Gruppen und CH-aciden Gruppen im Molekül tragen.

Zweckmäßigerweise werden solche mit einer Funktionalität von 2 bis 8, vorzugsweise 2 bis 6, und einem mittleren Molekulargewicht von 60 bis 8000 verwendet. Bewährt haben sich z.B. Polyether-polyamine und/oder vorzugsweise Polyole ausgewählt aus der Gruppe der Polyether-polyole, Polyester-polyole, Polythioetherpolyole, Polyesteramide, hydroxylgruppenhaltigen Polyacetale und hydroxylgruppenhaltigen aliphatischen Polycarbonate oder Mischungen aus mindestens zwei der genanten Polyole, die bevorzugt ein mittleres Molekulargewicht von 301 bis 4000 aufweisen. Vorzugsweise Anwendung finden Polyester-polyole und/oder Polyether-polyole. Die Hydroxylzahl der Polyhydroxylverbindungen beträgt bevorzugt 100 bis 850, besonders bevorzugt 200 bis 600 mg KOH/g. Nähere Ausführungen zu den einsetzbaren Verbindungen sind beispielsweise aus EP-A-0 421 269 (Spalte 6, Zeile 23, bis Spalte 10, Zeile 5) oder EP-A-0 719 807 (Spalte 4, Zeile 23, bis Spalte 7, Zeile 55) ersichtlich. Die Hartschaumstoffe können ohne oder unter Mitverwendung von Kettenverlängerungs- und/oder Vernetzungsmitteln hergestellt werden. Zur Modifizierung der mechanischen Eigenschaften, z.B. der Härte, kann sich jedoch der Zusatz von Kettenverlängerungsmitteln, Vernetzungsmitteln oder gegebenenfalls auch Gemischen davon als vorteilhaft erweisen. Als Kettenverlängerungs- und/oder Vernetzungsmittel können Verbindungen mit Molekulargewichten kleiner als 400, vorzugsweise von 60 bis 300 verwendet werden, die üblicherweise eine Funktionalität von 2 bis 6 aufweisen. Nähere Ausführungen zu diesen und weiteren einsetzbaren Verbindungen sind beispielsweise aus EP-A-0 421 269 (Spalte 10, Zeilen 6 bis 48) zu entnehmen.

Sofern zur Herstellung der Hartschaumstoffe Kettenverlängerungsmittel, Vernetzungsmittel oder Mischungen davon Anwendung finden, kommen diese zweckmäßigerweise in einer Menge von 0 bis 20 Gew.-%, vorzugsweise von 2 bis 8 Gew.-%, bezogen auf das Gewicht der gegenüber Isocyanaten reaktiven Verbindungen mit einem Molekulargewicht von 60 bis 8000, zum Einsatz.

Als Treibmittel wird erfindungsgemäß bevorzugt im wesentlichen, besonders bevorzugt ausschließlich Wasser eingesetzt. Gegebenenfalls können zusätzlich üblichen physikalischen Treibmittel wie Alkane, Alkene, Cycloalkane, Ester, Ether, Ketone und/oder Acetale zum Einsatz kommen. Beispielhaft seien im einzelnen genannt: Butan, n-Pentan, iso-Pentan, Cyclopentan, Cyclohexan, Methylformiat, Ethylformiat, Methylacetat, Ethylacetat, Methylethylether, Diethylether und/oder Aceton, Formaldehyddimethylacetal. Dabei können die physikalischen Treibmittel natürlich auch als Mischungen verwendet werden. Wie bereits ausgeführt, wird besonders bevorzugt ausschließlich Wasser als Treibmittel eingesetzt. Die eingesetzte Menge an Wasser beträgt üblicherweise 1 bis 10 Gew.-%, bevorzugt 3 bis 6 Gew.-%, jeweils bezogen auf das Gewicht der gegenüber Isocyanaten reaktiven Verbindungen.

Als Katalysatoren zur Herstellung der PUR- und/oder PUR/PIR-Hartschaumstoffe werden insbesondere Verbindungen verwendet, die die Reaktion der reaktiven Wasserstoffatome, insbesondere Hydroxylgruppen, enthaltenden Verbindungen der Komponente (b) mit den organischen, gegebenenfalls modifizierten Polyisocyanaten (a) stark beschleunigen. Die Isocyanatgruppen können durch geeignete Katalysatoren aber auch miteinander zur Reaktion gebracht werden, wobei neben den Addukten zwischen Isocyanaten und den Verbindungen mit wasserstoffaktiven Gruppen vorzugsweise Isocyanuratstrukturen entstehen.

Als Katalysatoren werden also insbesondere solche Stoffe verwendet, die Reaktionen der Isocyanate beschleunigen, insbesondere die Urethan-, Harnstoff- und Isocyanuratbildung.

Bevorzugt hierfür sind tertiäre Amine, Zinn- und Bismutumverbindungen, Alkali- und Erdalkalicarboxylate, quaternär Ammoniumsalze, s-Hexahydrotriazine und Tris-(dialkylaminomethyl)-phenole.

Nähere Angaben zu einsetzbaren Katalysatoren sind beispielsweise aus EP-A-0 719 807 (Spalte 9, Zeilen 5 bis 56) zu entnehmen.

Der Reaktionsmischung zur Herstellung der PUR- und/oder PUR/PIR-Hartschaumstoffe können gegebenenfalls auch noch Hilfsmittel und/oder Zusatzstoffe einverleibt werden. Genannt seien beispielsweise oberflächenaktive Substanzen, Schaumstabilisatoren, Zellregler, Flammschutzmittel, Füllstoffe, Farbstoffe, Pigmente, Hydrolyseschutzmittel, fungistatische und bakteriostatisch wirkende Substanzen. Nähere Ausführungen zu den einsetzbaren Verbindungen sind beispielsweise aus EP-A-0 421 269 (Spalte 12, Zeile 55, bis Spalte 14, Zeile 16) oder EP-A-0 719 807 (Spalte 9, Zeile 58, bis Spalte 13, Zeile 17) ersichtlich.

Zur Herstellung der PUR-Hartschaumstoffe werden die organischen und/oder modifizierten organischen Polyisocyanate und die gegenüber Isocyanaten reaktiven Verbindungen in solchen Mengen zur Umsetzung gebracht, daß das Äquivalenz-Verhältnis von NCO-Gruppen der Polyisocyanate zur Summe der reaktiven Wasserstoffatome 0,85 bis 1,75:1, vorzugsweise 1,0 bis 1,3:1 und insbesondere 1,1 bis 1,2:1, beträgt. Falls die Hartschaumstoffe zumindest teilweise Isocyanuratgruppen gebunden enthalten, wird üblicherweise ein Verhältnis von NCO-Gruppen der Isocyanate zur Summe der reaktiven Wasserstoffatome der gegenüber Isocyanaten reaktiven Verbindungen von 1,5 bis 60:1, vorzugsweise 3 bis 8:1, angewandt.

Die Hartschaumstoffe werden vorteilhafterweise nach dem one shot-Verfahren, beispielsweise mit Hilfe der Hochdruck- oder Niederdruck-Technik hergestellt. Als besonders vorteilhaft hat es sich erwiesen, nach dem Zweikomponenten-Verfahren zu arbeiten und die gegenüber Isocyanaten reaktiven Verbindungen, die Treibmittel und gegebenenfalls Katalysatoren, Hilfs- und/oder Zusatzstoffe in der Komponente (A), der sogenannten Polyolkomponente, zu vereinigen und als Komponente (B), der sogenannten Isocyanatkomponente, die Isocyanate oder Mischungen aus den Isocyanaten und gegebenenfalls Treibmittel zu verwenden.

Die Herstellung von Sandwichelementen, Rohren oder der anderen erfindungsgemäßen Artikel ist allgemein bekannt.

Beispielsweise werden die Ausgangskomponenten bei einer Temperatur von 15 bis 80°C, vorzugsweise von 18 bis 25°C, gemischt und in den Raum zwischen (i) und (iii) gegebenenfalls unter erhöhtem Druck eingebracht.

Die Erfindung soll anhand der folgenden Beispiele näher erläutert werden.

Die Ausgangskomponenten zur Herstellung der Polyisocyanat-Polyadditionsprodukte sind in der Tabelle 1 dargestellt, wobei sich die Angaben auf Gewichtsteile beziehen:

**Tabelle 1**

| A-Komponente | Beispiel 1 | Vergleichsbeispiel 1 | Vergleichsbeispiel 2 |
|---|---|---|---|
| Polyol 1 | 60,80 | 36,90 | 57,00 |
| Polyol 2 | 31,30 | 22,00 | - |
| Polyol 3 | - | 15,00 | 28,80 |
| Polyol 4 | - | 2,50 | - |
| Stabilisator 1 | 2,00 | - | - |
| Stabilisator 2 | - | 0,50 | 0,50 |
| Stabilisator 3 | - | 1,00 | 0,90 |
| Polyol 5 | - | 5,00 | - |
| Tallöl | - | 10,00 | - |
| Kat. 1 | 0,90 | 2,60 | 0,80 |
| Kat. 2 | - | 0,20 | - |
| Wasser | 5,00 | 4,30 | 4,00 |
| R 141b | - | - | 8,00 |

**Tabelle 2**

| | Hydroxylzahl | Funktionalität | Starter | Alkylenoxid |
|---|---|---|---|---|
| Polyol 1 | 410 | 3,9 | Saccharose, Pentaerytrit, Diethylenglycol | Propylenoxid |
| Polyol 2 | 100 | 2,0 | Propylenglycol | Propylenoxid |
| Polyol 3 | 400 | 3,0 | Glycerin | Propylenoxid |
| Polyol 4 | 770 | 4,0 | Ethylendiamin | Propylenoxid |
| Polyol 5 | 190 | 2,0 | Ethylenglycol | Ethylenoxid |

- Stabilisator 1:: Schaumstabilisator auf Siliconbasis (Tegostab 8404)
- Stabilisator 2:: Schaumstabilisator auf Siliconbasis (DC-5103)
- Stabilisator 2:: Schaumstabilisator auf Siliconbasis (Tegostab B8423 der Fa. Goldschmidt, Essen)
- Tallöl:: bestehend aus ungefähr 96 Gew.-% Fettsäuren, ungefähr 2 Gew.-% unverseifbaren Harzsäuren und ungefähr 2 Gew.-% unverseifbaren Bestandteilen, wobei sich die Summen dieser Bestandteile zu 100 % addieren. Dabei beträgt der Anteil der einzelnen Fettsäuren, jeweils bezogen auf die Gesamtmenge der Fettsäuren, an Phenol- und konjugierten C₁₈- Fettsäuren ungefähr 93 Gew.-% und an ungesättigten Fettsäuren ungefähr 1 bis 3 Gew.-%.
- Kat. 1:: N,N-Dimethylaminocyclohexan
- Kat. 2:: N,N",N"-Trimethyl-N-2-Aminoethylpiperazin
- R 141b:: Dichlorfluormethan
- B 227:: Mischung aus Diphenylmethandiisocyanaten und Polyphenylenpolymethylenpolyisocyanaten (Roh-MDI) mit einem NCO-Gehalt von 31,5 Masse-%.

Die in der Tabelle 1 angegebenen A-Komponenten wurden mit B 227 in einem paraffinierten Papierbecher von 660 ml mit einer Gesamteinwaage von 70 g bei einer Temperatur von 20°C intensiv vermischt und verschäumt.

**Tabelle 3**

| | Beispiel 1 | Vergleichsbeispiel 1 | Vergleichsbeispiel 2 |
|---|---|---|---|
| A-Komponente [g] | 26,7 | 27,3 | 28,9 |
| B-Komponente [g] | 43,3 | 42,7 | 41,1 |
| Startzeit [s] | 22 | 15 | 26 |
| Abbindezeit [s] | 100 | 61 | 120 |
| Steigzeit [s] | 177 | 130 | 200 |
| Becherrohdichte [g/cm³] | 0,031 | 0,0315 | 0,031 |
| Max. Druck [bar] | 1,15 | 1,35 | 1,16 |

Der max. Druck gibt an, welcher Druck bei dem Verschäumen der verschiedenen Reaktionsmischung entsteht. Der Druck kann wie folgt bestimmt werden: Ein in eine temperierbare Schäumform A eingesetzter Weißblecheimer B (Volumen 4,08 l) ist mit einer Druckmeßdose C versehen, die das Druck- und Zugverhalten des in dem Eimer eingefüllten Prüfschaumes mißt. Die Kontaktstelle von Druckmeßdose und Schaum ist offen und nur mit doppelseitiger Klebefolie D versehen, die Druck und Zug auf die Druckmeßdose überträgt. Die Druckmeßdose wiederum ist an einen Meßschreiber E angeschlossen, der die gemessenen Daten (Druck gemessen über die Zeit) aufzeichnet.

Eine maschinelle Prüfung der Schäume kann wie folgt erfolgen: 100 Gewichtsteile der in der Tabelle 1 angegebenen A-Komponenten wurden mit dem entsprechenden Masseverhältnis der B- Komponente in einem Hochdruck-Puromat PU 15 gemischt und die Reaktionsmischung in eine Boschlanze (spezielle Form aus der Kühlschrankindustrie) eingespritzt. Man erhielt einen gleichförmigen PU-Hartschaumstoff.

Die hergestellten Schaumstoffe wiesen nahezu gleiche Druckspannungen (DIN 53 421), Stauchungen (DIN 53 421), Wasseraufnahmen (DIN 53 428), Dimensionsstabilitäten (DIN 53 431) und Anteile an geschlossenen Zellen (ISO 4590) auf.

### Herstellung eines erfindungsgemäßen Verbundelementes

Ein Warmwasserspeicher, bestehend aus einem 200 l Innenbehälter (emaillierter Stahl), einem Außenblech (0,7 mm Stahl) und einem selbsttragenden Boden- und Deckelteil aus ABS mit einem auszuschäumenden Volumen (zwischen Innenbehälter und Außenblech) von 79 l wurde ohne Stützform mit einem wassergetriebenen System analog Beispiel 1 verschäumt. Das eingebrachte Schaumgewicht betrug 3160 g (Gesamtrohdichte: 40 g/l). Der gefertigte Speicher zeigte keinerlei Ausbeulungen aufgrund eines zu hohen Druckes und zeigte die gleichen physikalischen Eigenschaften wie die nach Beispiel 1 gefertigte Prüflanze.

## Patentansprüche

1. Warmwasserspeicher enthaltend Verbundelemente enthaltend (i) mindestens eine selbsttragende, kompakte Komponente, (ii) Hartschaumstoff auf der Basis von Polyisocyanat-Polyadditionsprodukten, der keine halogenierte Kohlenwasserstoffe mit einem Siedepunkt von 20 bis 70°C bei einem Druck von 1 bar enthält und wobei als Treibmittel zur Herstellung von (ii) im wesentlichen Wasser eingesetzt wird, und mindestens eine weitere kompakte Komponente (iii).

2. Warmwasserspeicher nach Anspruch 1, **dadurch gekennzeichnet, daß** (i) eine äußere Wand und (iii) einen inneren Behälter darstellt und (ii) zwischen (i) und (iii) angeordnet ist.

3. Warmwasserspeicher nach Anspruch 1, **dadurch gekennzeichnet, daß** (ii) von (i) und (iii) umschlossen wird.

4. Warmwasserspeicher nach Anspruch 1, **dadurch gekennzeichnet, daß** (i) und (iii) durch Abstandshalter, die zwischen (i) und (iii) angeordnet sind, fixiert werden.

5. Warmwasserspeicher nach Anspruch 2, **dadurch gekennzeichnet, daß** (i) aus mindestens zwei Elementen besteht, zwischen denen eine Dichtung angeordnet ist.

6. Verfahren zur Herstellung von Warmwasserspeichern enthaltend Verbundelemente, **dadurch gekennzeichnet, daß** man in einem Reaktionsraum, der begrenzt ist durch folgende Schichten:
i) selbsttragende, kompakte Komponente
iii) kompakte Komponente
Isocyanate mit gegenüber Isocyanaten reaktiven Verbindungen in Gegenwart von Treibmitteln und gegebenenfalls Katalysatoren, Hilfs- und/oder Zusatzstoffen umsetzt, wobei keine halogenierten Kohlenwasserstoffe mit einem Siedepunkt von 20 bis 70 °C bei einem Druck von 1 bar halogenierten Kohlenwasserstoffe verwendet werden und wobei als Treibmittel zur Herstellung von (ii) im wesentlichen Wasser eingesetzt wird.

7. Verfahren nach Anspruch 6, **dadurch gekennzeichnet, daß** die Reaktionsmischung enthaltend die Isocyanate, die gegenüber Isocyanaten reaktiven Verbindungen, die Treibmittel und gegebenenfalls die Katalysatoren, Hilfs- und/oder Zusatzstoffe zur Herstellung des Hartschaumstoffs (ii) auf der Basis von Polyisocyanat-Polyadditionsprodukten bei der Umsetzung von 163 g Reaktionsmischung in einem geschlossenen, zylindrischen Behältnis mit einem Volumen von 4,08 l einen maximalen Druck in dem Behältnis entwickelt, der kleiner als 1,25 bar, bevorzugt zwischen 1,02 und 1,08 bar ist.

## Claims

1. A hot-water tank comprising composite elements comprising (i) at least one self-supporting compact component, (ii) rigid foam based on polyisocyanate polyaddition products and comprising no halogenated hydrocarbons with a boiling point of from 20 to 70°C at a pressure of 1 bar, and (iii) at least one other compact component, where the blowing agent used for producing (ii) in essence comprises water.

2. A hot-water tank as claimed in claim 1, wherein (i) is an outer wall and (iii) is an inner container and (ii) has been arranged between (i) and (iii).

3. A hot-water tank as claimed in claim 1, wherein (ii) is enclosed by (i) and (iii).

4. A hot-water tank as claimed in claim 1, wherein (i) and (iii) are fixed by spacers which have been arranged between (i) and (iii).

5. A hot-water tank as claimed in claim 2, wherein (i) is composed of at least two elements, between which a gasket has been arranged.

6. A process for producing hot-water tanks comprising composite elements, which comprises reacting isocyanates with compounds reactive to isocyanates in a reaction space which has been limited by the following layers:
i) self-supporting compact component
iii) compact component
in the presence of blowing agents and, if desired, of catalysts, auxiliaries and/or additives, where no halogenated hydrocarbons with a boiling point of from 20 to 70 °C at a pressure of 1 bar are used, and where the blowing agent used for producing (ii) in essence comprises water.

7. A process as claimed in claim 6, wherein, when 163 g of the reaction mixture comprising the isocyanates, the compounds reactive to isocyanates, the blowing agents and, if desired, the catalysts, auxiliaries and/or additives are reacted in a closed, cylindrical vessel with a volume of 4.08 l to produce the rigid foam (ii) based on polyisocyanate polyaddition products, the maximum pressure developed in the vessel is less than 1.25 bar, preferably from 1.02 to 1.08 bar.

## Revendications

1. Réservoir d'eau chaude contenant des éléments composites comprenant (i) au moins un composant compact, autoportant, (ii) de la mousse dure à base de produits de polyaddition de polyisocyanate qui ne contient aucun hydrocarbure halogéné ayant un point d'ébullition de 20 à 70°C à une pression de 1 bar, de l'eau étant essentiellement mise en oeuvre comme agent gonflant pour la préparation de (ii), et au moins un autre composant compact (iii).

2. Réservoir d'eau chaude suivant la revendication 1, **caractérisé en ce que** (i) forme une paroi extérieure et (iii) un réservoir intérieur et **en ce que** (ii) est agencé entre (i) et (iii).

3. Réservoir d'eau chaude suivant la revendication 1, **caractérisé en ce que** (ii) est entouré par (i) et (iii) .

4. Réservoir d'eau chaude suivant la revendication 1, **caractérisé en ce que** (i) et (iii) sont fixés par des entretoises qui sont agencées entre (i) et (iii).

5. Réservoir d'eau chaude suivant la revendication 2, **caractérisé en ce que** (i) est constitué d'au moins deux éléments entre lesquels est agencé un organe d'étanchéité.

6. Procédé de fabrication de réservoirs d'eau chaude contenant des éléments composites, **caractérisé en ce que**, dans un espace réactionnel délimité par les couches suivantes :
i) un composant compact, autoportant,
iii) un composant compact,
on fait réagir des isocyanates avec des composés réactifs vis-à-vis d'isocyanates, en présence d'agents gonflants et éventuellement des catalyseurs, d'adjuvants et/ou d'additifs, aucun hydrocarbure halogéné ayant un point d'ébullition de 20 à 70°C à une pression de 1 bar n'étant utilisé, de l'eau étant essentiellement mise en oeuvre comme agent gonflant pour la préparation de (ii).

7. Procédé suivant la revendication 6, **caractérisé en ce que** le mélange réactionnel contenant les isocyanates, les composés réactifs vis-à-vis d'isocyanates, l'agent gonflant et éventuellement les catalyseurs, adjuvants et/ou additifs, destinés à la préparation de la mousse dure (ii) à base de produits de polyaddition de polyisocyanate développe, lors de la réaction de 163 g de mélange réactionnel dans un récipient cylindrique, fermé, d'un volume de 4,08 l, une pression maximale dans le récipient qui est inférieure à 1,25 bar, de préférence entre 1,02 et 1,08 bar.
